# EUROPEAN PATENT APPLICATION

(11) **EP 2 133 982 A2**
(43) Date of publication of application: **16.12.2009**
(21) Application number: 09162535.0
(22) Date of filing: 12.06.2009
(51) Int. Cl.: H02K 51/00, H02K 7/116

(54) **An electrical machine with integrated magnetic gears**

(30) Priority: 13.06.2008 CN 200810125455
(71) Applicant: Siemens Aktiengesellschaft, 80333 München (DE)
(72) Inventor: Yu, Er, 200435 Shanghai (CN); Li, Lei, Dr., 200072 Shanghai (CN); Schierling, Hubert, Dr., 91052 Erlangen (DE)

(57) **Abstract**

The present invention proposes an integrated electrical machine, comprising a permanent magnet gear (10) and a universal electrical machine (20) which has a rotor (21) and a stator (22), said permanent magnet gear (10) and said universal electrical machine (20) are disposed in a housing (30); and said permanent magnet gear (10) is connected to an external load or a driving source via a low speed rotational shaft (50) on one side, and connected to the rotor (21) of said universal electrical machine (20) via a high speed rotational shaft (60) on the other side. Alternatively, said permanent magnet gear (10) is connected to the rotor (21) of said universal electrical machine (20) via the low speed rotational shaft (50) on one side, and connected to an external load or a driving source via the high speed rotational shaft (60) on the other side. The integrated electrical machine of the present invention has a simple and compact structure.

## Description

### Technical Field

The present invention relates to an integrated electrical machine and, particularly, to an electrical machine integrated with an axial or radial flux permanent magnet gear and an axial or radial-flux universal electrical machine.

### Background Art

Existing electrical machines are normally designed to operate at a high speed, so as to decrease the volume and weight as well as the costs thereof. When an electrical machine used as an electrical generator or a motor is required to shift from low-speed rotating to high-speed rotating or from high-speed rotating to low-speed rotating, it generally needs to recur to a mechanical transmission case to achieve said shift.

U.S. patent no. 4,763,031 discloses a unit integrated with a universal electrical machine and a mechanical transmission case, wherein said transmission case comprises a housing and an arbor bearing and an epicyclic gear train which are disposed within said housing, said bearing being also used as a rotating shaft of a universal electrical machine outside the housing. U.S. patents nos. 7,083,378 and 7,259,472 disclose a wind power generator formed by integrating a mechanical transmission case and an electrical machine within one housing, said mechanical transmission case being used for increasing the rotational speed to drive the electric power generation. Generally, the above mechanical transmission cases are relatively expensive and tend to produce mechanical fatigue, vibration and noise in operation, thus affecting the reliability and stability of the system, and furthermore, the mechanical transmission cases have high requirements with regard to the regularity and quality of their lubrication and maintenance.

It is disclosed by L. H. Hansen, L. Helle, F. Blaabjerg in Conceptual survey of Generators and Power Electronics for Wind Turbines, Report of Risø National Laboratory, Roskilde, Denmark, December 2001, a solution for using a direct-drive electrical machine to connect a low speed power source with a low speed load, and since a mechanical transmission case is not used, the reliability and stability of the system can be improved. However, when the direct-drive electrical machine is used in a low speed system (for example, a wind turbine generator of 10-20 revolutions per minute (RPM)), it will need a large number of magnetic pole pairs, resulting in a complex system structure and sharp increase in volume and weight; and it is necessary to use a power converter in conjunction with the system to convert a low frequency voltage into a power frequency voltage, thus further leading to a complex structure and increased costs.

### Summary of the invention

In view of the situation, the present invention provides a reliable, stable and integrated electrical machine with a simple and compact structure.

To realize the above object, the present invention proposes an integrated electrical machine, comprising a permanent magnet gear and a universal electrical machine which has a rotor and a stator, said permanent magnet gear and said universal electrical machine are disposed in a housing; and said permanent magnet gear is connected to an external load or a driving source via a low speed rotational shaft on one side, and connected to the rotor of said universal electrical machine via a high speed rotational shaft on the other side, alternatively, said permanent magnet gear is connected to the rotor of said universal electrical machine via the low speed rotational shaft on one side, and connected to an external load or a driving source via the high speed rotational shaft on the other side.

According to one aspect of the present invention, said permanent magnet gear is an axial-flux permanent magnet gear, comprising a low speed rotor and a high speed rotor which are disposed axially and in parallel, and a stator fixed between said low speed rotor and said high speed rotor, with said low speed rotor and said high speed rotor being fixed respectively onto said low speed rotational shaft and said high speed rotational shaft; and the rotor of said universal electrical machine is fixed onto the high speed rotational shaft of said axial-flux permanent magnet gear.

According to another aspect of the present invention, the low speed rotor and the high speed rotor of said axial-flux permanent magnet gear comprise respectively a back iron and magnets radially distributed evenly along the perimeter of said back iron; and the magnets of said low speed rotor and said high speed rotor are disposed oppositely and coaxially.

According to another aspect of the present invention, the stator of said axial-flux permanent magnet gear is fixed onto said housing comprising a back-plate and magnetic sheets radially distributed evenly along the perimeter of said back-plate.

According to another aspect of the present invention, the south and north poles of the magnets of said low speed rotor and high speed rotor are disposed alternately, and the number of the south and north pole pairs of the magnets of said low speed rotor is different from the number of the south and north pole pairs of the magnets of said high speed rotor, and the number of the magnetic sheets of said stator is the sum of the numbers of the pole pairs of the magnets of said low speed rotor and said high speed rotor.

According to another aspect of the present invention, a soft magnetic material, for example silicon steel sheets, is inserted between the south and north pole pair of the magnets of said high speed rotor to adjust the pole-arc factor.

According to another aspect of the present invention, a bearing plate is disposed fixedly on the stator of said axial-flux permanent magnet gear; one end of said low speed rotational shaft is supported on one side of said bearing plate by a bearing, and the other end of said low speed bearing passes through the back iron of the low speed rotor of said axial-flux permanent magnet gear to fix said low speed rotor thereon, and is supported on said housing by a bearing; and one end of said high speed rotational shaft is supported on the other side of said bearing plate by a bearing, and the other end of said high speed rotational shaft passes through the back iron of the high speed rotor of said axial-flux permanent magnet gear to fix said high speed rotor thereon, and is supported on said housing by a bearing.

According to another aspect of the present invention, said low speed rotational shaft is supported on the housing by the bearing, and one end thereof extends towards the exterior of the housing so as to be connected to the external load or the power source, while the other end thereof extends towards the interior of the housing and passes through the back iron of the low speed rotor of said axial-flux permanent magnet gear to fix said low speed rotor thereon; and a fixed plate fixed within said housing is disposed between said axial-flux permanent magnet gear and said universal electrical machine, and said high speed rotational shaft is supported on said housing and said fixed plate respectively by the bearing and a bearing, and extends towards the direction of said axial-flux permanent magnet gear and passes through the back iron of the high speed rotor of said axial-flux permanent magnet gear so as to fix said high speed rotor thereon.

According to one aspect of the present invention, said permanent magnet gear is a radial permanent magnet gear, said radial permanent magnet gear comprises a low speed rotor and a high speed rotor which are disposed radially and coaxially, and a stator disposed between said low speed rotor and high speed rotor, and said low speed rotor and said high speed rotor are fixed respectively onto said low speed rotational shaft and said high speed rotational shaft; and the rotor of said universal electrical machine is fixed onto the high speed rotational shaft of said axial-flux permanent magnet gear.

According to one aspect of the present invention, said low speed rotor and said high speed rotor respectively comprise a back iron and magnets distributed evenly along the perimeter of the back iron with south and north poles thereof alternately and evenly disposed towards said stator.

According to one aspect of the present invention, said stator of the radial flux permanent magnet gear comprises a back-plate and magnetic sheets embedded evenly in said back-plate.

According to one aspect of the present invention, the low speed rotational shaft is supported on the housing by a bearing with one end thereof extending towards the exterior of the housing so as to be connected to the external load or the driving source, and with the other end thereof extending towards the interior of the housing and passing through the back iron of the low speed rotor of said radial flux permanent magnet gear to fix the low speed rotor of said radial flux permanent magnet gear thereon; a fixed plate fixed in said housing is disposed between said radial flux permanent magnet gear and said universal electrical machine, and the high speed rotational shaft is supported on said housing and said fixed plate respectively by a bearing and a bearing, extends towards the direction of said radial flux permanent magnet gear and passes through the back iron of the high speed rotor of said radial flux permanent magnet gear so as to fix the high speed rotor of said radial flux permanent magnet gear thereon.

According to one aspect of the present invention, said universal electrical machine is a radial-flux universal electrical machine, and the rotor and the stator thereof are disposed radially and coaxially.

According to one aspect of the present invention, said universal electrical machine is an axial-flux universal electrical machine, and the rotor and the stator thereof are disposed axially and in parallel.

According to one aspect of the present invention, said axial-flux universal electrical machine comprises a pair of rotors disposed axially and in parallel and a stator fixed between the pair of rotors.

According to one aspect of the present invention, one of the rotors of said axial-flux universal electrical machine shares the back iron with the high speed rotor of said axial flux permanent magnet gear.

According to one aspect of the present invention, said axial-flux universal electrical machine comprises a pair of stators disposed axially and in parallel and a rotor positioned between the pair of stators.

Since the integrated electrical machine of the present invention employs a universal electrical machine in conjunction with a non-contact permanent magnet gear, instead of a mechanical transmission case, to perform the speed shifting, the costs of lubrication and maintenance are reduced, and the reliability and stability of the system are improved. In the integrated electrical machine of the present invention, the permanent magnet gear and the universal electrical machine share such systems as supports, rotational shafts, bearings, heat dissipation and so on, thus making the structure of the whole electrical machine simple and compact. In addition, the permanent magnet gear and the universal electrical machine in the integrated electrical machine of the present invention can be selected as a radial or axial-flux permanent magnet gear and a radial or axial-flux universal electrical machine according to practical needs.

### Description of the drawings

Fig. 1 is an axial cross sectional diagram of the basic structure of the integrated electrical machine of the present invention;
Fig. 2 is an axial cross sectional diagram of the structure of the first embodiment of the integrated electrical machine of the present invention;
Fig. 3 is a radial cross sectional diagram of the magnets of a low speed rotor of an axial-flux permanent magnet gear in the integrated electrical machine of the present invention shown in Fig. 2;
Fig. 4 is a radial cross sectional diagram of the magnets of a high speed rotor of the axial-flux permanent magnet gear in the integrated electrical machine of the present invention shown in Fig. 2;
Fig. 5 is a radial cross sectional diagram of a stator of the axial-flux permanent magnet gear in the integrated electrical machine of the present invention shown in Fig. 2;
Fig. 6 is a radial cross sectional diagram of the universal electrical machine in the integrated electrical machine of the present invention shown in Fig. 2;
Fig. 7 is an axial cross sectional diagram of the structure of the second particular embodiment of the integrated electrical machine of the present invention;
Fig. 8 is a radial cross sectional diagram of a stator of the universal electrical machine in the integrated electrical machine of the present invention as shown in Fig. 7;
Fig. 9 is an axial cross sectional diagram of the structure of the third particular embodiment of the integrated electrical machine of the present invention;
Fig. 10 is an axial cross sectional diagram of the structure of the fourth particular embodiment of the integrated electrical machine of the present invention;
Fig. 11 is an axial cross sectional diagram of the structure of the fifth particular embodiment of the integrated electrical machine of the present invention;
Fig. 12 is an axial cross sectional diagram of the structure of the sixth particular embodiment of the integrated electrical machine of the present invention; and
Fig. 13 is a radial cross sectional diagram of Fig. 12.

### Detailed description of the invention

The principal design concept of the integrated electrical machine of the present invention lies in the integration of a permanent magnet gear and a universal electrical machine, by means of the coordination between said permanent magnet gear and universal electrical machine, to realize the purpose of making the structure of the integrated electrical machine simple and compact and easy to be installed and maintained.

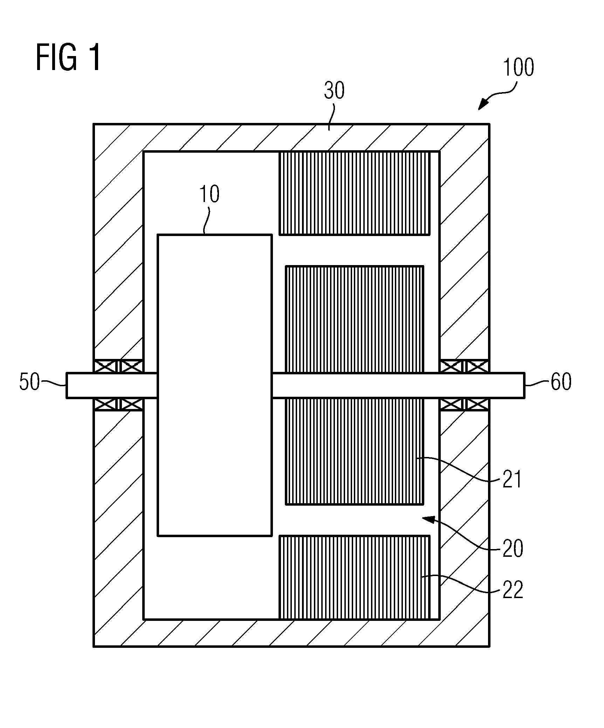

Referring to Fig. 1, the integrated electrical machine 100 of the present invention comprises a permanent magnet gear 10 and a universal electrical machine 20 which are disposed in a housing 30, said universal electrical machine 20 comprising a rotor 21 and a stator 22. Said permanent magnet gear 10 can be selected as an axial-flux permanent magnet gear or radial flux permanent magnet gear, and said universal electrical machine 20 can be selected as a radial-flux universal electrical machine or axial-flux universal electrical machine.

Said permanent magnet gear 10 is connected to an external load or a driving source via a low speed rotational shaft 50 on one side, and connected to the rotor 21 of said universal electrical machine 20 via a high speed rotational shaft 60 on the other side.

Hereinbelow, the design concept of the present invention will be further described with reference to several embodiments of the integrated electrical machine of the present invention.

### Embodiment one

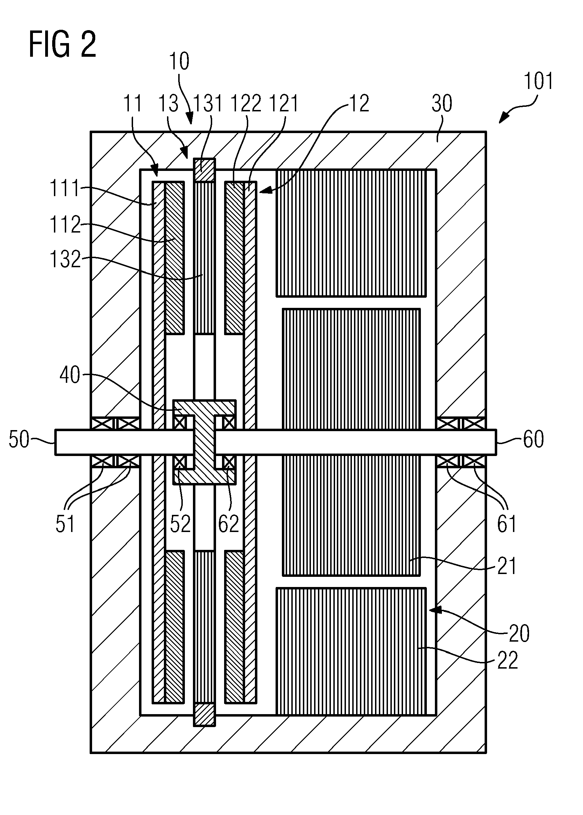

Figs. 2 to 6 show a first embodiment of the integrated electrical machine of the present invention, and in this embodiment, said integrated electrical machine 100 is implemented as an integrated electrical machine 101 by integrating an axial-flux permanent magnet gear with a radial-flux universal electrical machine.

Referring to Fig. 2, the integrated electrical machine 101 of this embodiment comprises an axial-flux permanent magnet gear 10 and a radial-flux universal electrical machine 20 coordinating with said axial-flux permanent magnet gear 10, and said axial-flux permanent magnet gear 10 and said radial-flux universal electrical machine 20 are disposed in a housing 30.

Said axial-flux permanent magnet gear 10 comprises a low speed rotor 11, a high speed rotor 12 and a stator 13 which are disposed axially and in parallel, wherein said stator 13 is fixed between said low speed rotor 11 and said high speed rotor 12.

Said low speed rotor 11 comprises a back iron 111 and magnets 112 disposed fixedly on said back iron 111. Said back iron 111, which is preferably disk-shaped, is formed of silicon steel sheets, solid iron plate or other soft magnetic materials. Said magnets 112, preferably in a ring shape, are made of a rare-earth material, disposed on said back iron 111 by means of a surface-binding technique, radially distributed evenly along the circumference of said back iron 111, and being coaxial with said back iron 111.

The structure of said high speed rotor 12 is similar to that of said low speed rotor 11 and it comprises a back iron 121 and magnets 122 disposed fixedly on said back iron 121. Said back iron 121, which is preferably disk-shaped, is made of silicon steel sheets, solid iron plate or other soft magnetic materials. Said magnets 122, preferably in a ring shape, are made of a rare-earth material, disposed on said back iron 121 by means of a surface-binding technique, radially distributed evenly along the circumference of said back irons 121, and being coaxial with said back iron 121.

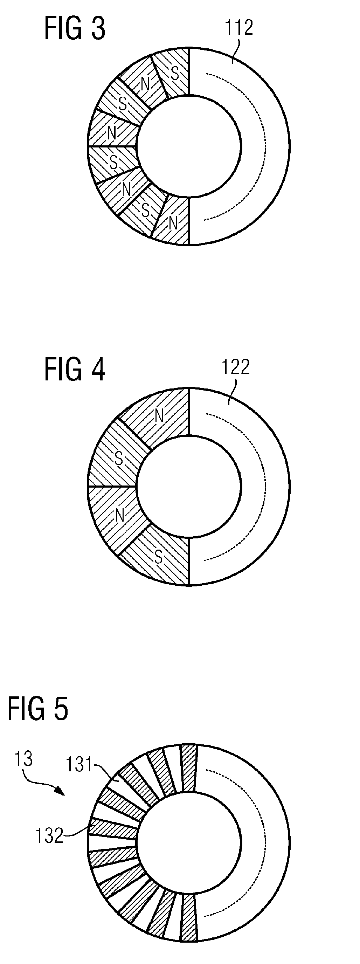

The magnets 112 of said low speed rotor 11 and the magnets 122 of said high speed rotor 12 are disposed oppositely and coaxially. Referring to Fig. 3 in particular, the south and north poles S, N of the magnets 112 of said low speed rotor 11 are disposed alternately. Referring to Fig. 4 in particular, in one particular embodiment, the structure of the magnets 122 of said high speed rotor 12 is similar to that of the magnets 112 of said low speed rotor 11, with the south and north poles S, N disposed alternately, but the number of the south and north pole pairs is different from that of said low speed rotor 11. In a further embodiment, a soft magnetic material, such as a silicon steel sheet, is inserted between the south and north poles S, N of the magnets 122 of said high speed rotor 12 to adjust the pole-arc factor of the rotor, so as to meet different design requirements. Preferably, the radius of said low speed rotor 11 is equal to that of said high speed rotor 12 as a whole.

Referring to Fig. 5 in particular, said stator 13 comprises a back-plate 131 and magnetic sheets 132 disposed in said back-plate 131. Preferably, said back-plate 131 is made of a non-magnetic material that has a better heat conductivity. Said magnetic sheets 132, which are preferably ring-shaped, are radially distributed evenly along the circumference of said back-plate 131 and embedded in said back-plate 131. Said magnetic sheets 132 are coaxial with the magnets 112 of said low speed rotor 11 and the magnets 122 of said high speed rotor 12, and opposite respectively to the magnets 112 of said low speed rotor 11 and the magnets 122 of said high speed rotor 12, for adjusting the magnetic field coupling between the magnets 112 of said low speed rotor 11 and the magnets 122 of said high speed rotor 12. The number of said magnetic sheets 132 is the sum of the number of the south and north pole pairs of the magnets 112 of said low speed rotor 11 and the number of the south and north pole pairs of magnets 122 of said high speed rotor 12. Assuming that the number of the south and north pole pairs of the magnets 112 of said low speed rotor 11 is Nl, the number of the south and north pole pairs of the magnets 122 of said high speed rotor 12 is Nh, and the number of said magnetic sheets 132 is Ns, then Ns = Nl + Nh, and the gear ratio of said axial-flux permanent magnet gear 10 is Ngear = Nh/(Nh - Ns). In order to make the structure of said integrated electrical machine 100 compact, the gaps between said low speed rotor 11, said stator 13 and said high speed rotor 12 should be reduced as much as possible.

The back-plate 131 of said stator 13 is fixed on the housing 30 of said integrated electrical machine 100, with a bearing plate 40 being disposed fixedly on the axis of the back-plate. Preferably, the cross section of said bearing plate 40 is I-shaped. The low speed rotational shaft 50 passes through the axis of said low speed stator 11, with both its ends being disposed through a bearing 51 and a bearing 52 on said housing 30 and said bearing plate 40, respectively, and is connected to an external load or a power source via the end disposed on said housing 30 and extending outwards. Said low speed stator 11 is fixed on said low speed rotational shaft 50 with its back iron 111. Therefore, when said low speed stator 11 is driven to rotate, it causes said low speed rotational shaft 50 to rotate, thus driving the external load connected to said low speed rotational shaft 50; or when said low speed rotational shaft 50 is driven to rotate by the outside power source connected thereto, it causes said low speed stator 11 to rotate. Both ends of the high speed rotational shaft 60 are disposed on said housing 30 and said bearing plate 40, respectively, by a bearing 61 and a bearing 62, and extend towards the direction of said axial-flux permanent magnet gear 10 and pass through the axis of said high speed rotor 12. Said high speed rotor 12 is fixed on said high speed rotational shaft 60 with its back iron 121. Therefore, when said high speed stator 12 is driven to rotate, it causes said low speed rotor 11 to rotate, thus driving said low speed rotational shaft 50 to rotate, and further driving the external load connected to said low speed rotational shaft 50; or when said low speed rotational shaft 50 is driven to rotate by the outside power source connected thereto, it causes said low speed stator 11 to rotate, thus driving said high speed rotor 12 to rotate and driving said high speed rotational shaft 60 to rotate. Preferably, said low speed rotational shaft 50 and said high speed rotational shaft 60 lie in the same axis. It is further preferable that in order to dissipate heat, a fan system (not shown) can be fixed on said high speed rotational shaft 60.

On one side near to the high speed rotor 13 of said axial-flux permanent magnet gear 10, there is disposed said radial-flux universal electrical machine 20, which comprises a rotor 21 and a stator 22, wherein, said rotor 21 is fixed on said high speed rotational shaft 60, namely, it shares said high speed rotational shaft 60 with the high speed rotor 12 of said axial-flux permanent magnet gear 10, and said stator 22 is fixed on said housing 30 around said rotor 21.

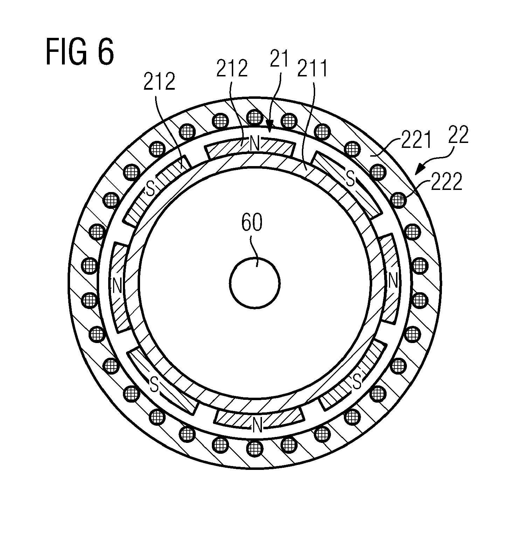

Particularly referring to Fig. 6, said rotor 21 comprises a rotor yoke 211 and pole pairs 212 disposed around said rotor yoke 211 in a manner that the north poles N and south poles S are alternated. Said stator 22 comprises a stator yoke 221 around said rotor 21 and a winding 222 wound around said stator yoke 221.

When said integrated electrical machine 100 is used as an electrical generator, said low speed rotational shaft 50 is connected to an outer power source (for example, wind power), and said outer power source drives said low speed rotational shaft 50 to rotate at a low speed, causing the low speed rotor 11 of the axial-flux permanent magnet gear 10 fixed on said low speed rotational shaft 50 to rotate at a low speed, and the low-speed rotation of said low speed rotor 11 drives said high speed rotor 12 to rotate at a high speed under the effect of a magnetic field, causing said high speed rotational shaft 60 to rotate at a high speed, further causing the rotor 21 of said radial-flux universal electrical machine 20 fixed on said high speed rotational shaft 60 to rotate at a high speed, thus making the stator 22 of said radial-flux universal electrical machine 20 to generate electric current. When said integrated electrical machine 100 is used as an electrical generator, said low speed rotational shaft 50 is connected to the external load, and said radial-flux universal electrical machine 20 causes its rotor 21 to rotate at a high speed under the effects of the electric power, driving said high speed rotational shaft 60 to rotate at a high speed, thus causing the high speed rotor 12 of said flux permanent magnet gear 10 fixed on said high speed rotational shaft 60 to rotate at a high speed; and the high-speed rotation of said high speed rotor 12 drives said low speed rotor 11 to rotate at a low speed under the effects of a magnetic field, further causing said low speed rotational shaft 50 to rotate at a low speed, driving the external load connected to said low speed rotational shaft 50 to move.

### Embodiment two

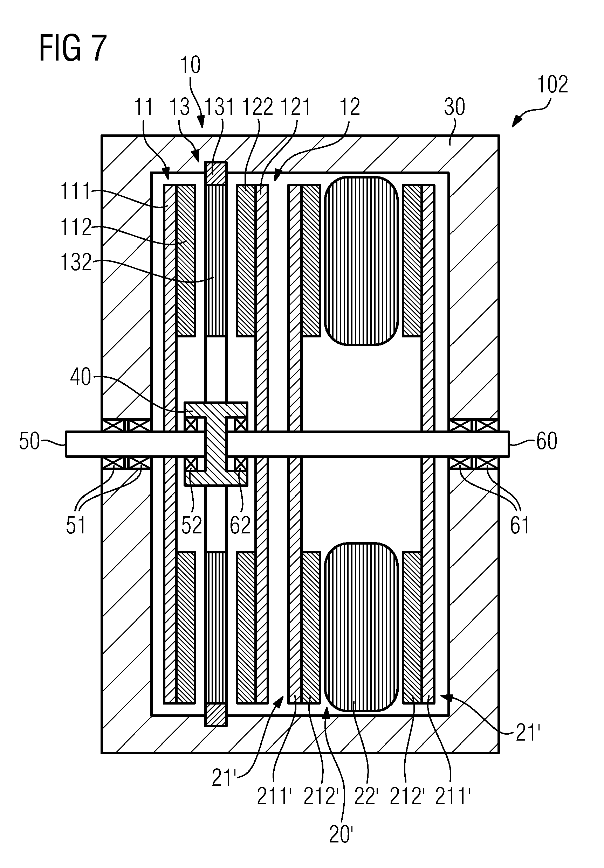

Figs. 7 to 8 show the second embodiment of the integrated electrical machine of the present invention, and in this embodiment, said integrated electrical machine 100 is implemented as an electrical machine 102 integrating an axial-flux permanent magnet gear with an axial-flux universal electrical machine.

Referring to Fig. 7, the structure of the integrated electrical machine 102 of the this embodiment is similar to that of the integrated electrical machine 101 of the first embodiment, and it differs in that in this embodiment, the radial-flux universal electrical machine 20 in the first particular embodiment is replaced by a double-rotor single-stator axial-flux universal electrical machine 20'.

Said axial-flux universal electrical machine 20' comprises a pair of rotors 21' which are disposed axially and in parallel and a stator 22' between the pair of rotors 21'. In order to make the structure of said integrated electrical machine 102 compact, the gap between said axial-flux universal electrical machine 20' and the axial-flux permanent magnet gear 10, and the gaps between the rotors 21' and stator 22' of said axial-flux universal electrical machine 20' should be reduced as much as possible. Each of said rotors 21' comprises a back iron 211' and magnets 212' fixed on said back iron 211' towards said stator 22' on one side. Said rotors 21' are fixed on said high speed rotational shaft 60 by its back iron 211', namely, said rotors 21' share said high speed rotational shaft 60 with the high speed rotor 12 of said axial-flux permanent magnet gear 10.

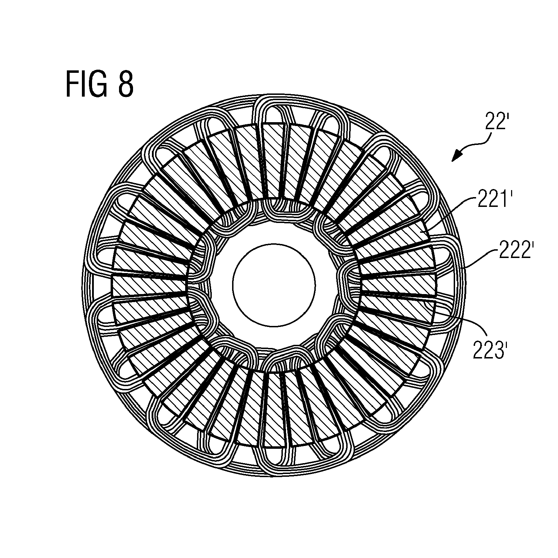

Referring to Fig. 8, said stator 22' comprises a stator core 221' and a winding 222', said stator core 221' being provided with a plurality of grooves 223', and said winding 222' being wound spirally around said stator core 221' and being fixed in said grooves 223'. Said stator core 221' is preferably made of a material with a low eddy loss, a low hysteresis loss and a high permeability, such as a silicon steel sheet.

### Embodiment three

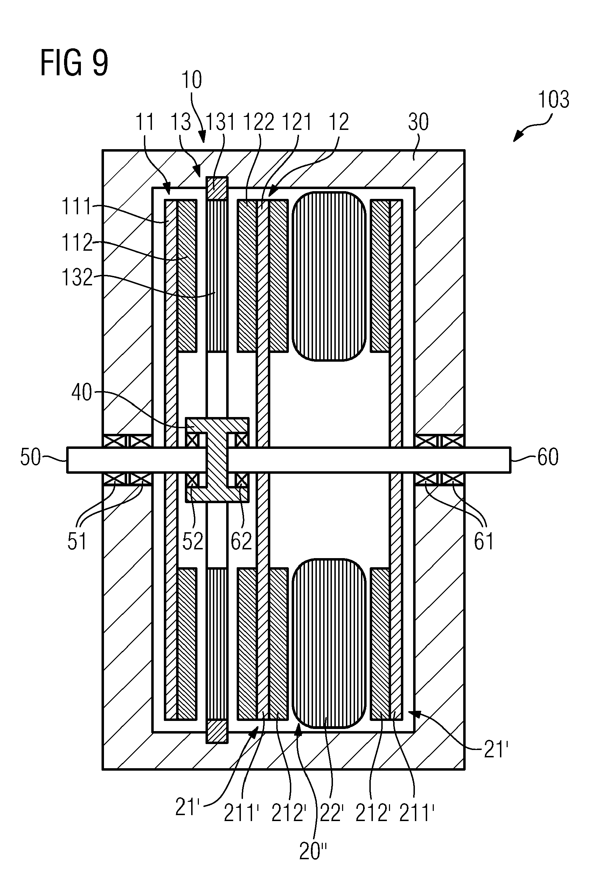

Fig. 9 shows the third embodiment of the integrated electrical machine of the present invention, and in this embodiment, said integrated electrical machine 100 is implemented as an electrical machine 103 integrating an axial-flux permanent magnet gear with an axial-flux universal electrical machine.

Referring to Fig. 9, the structure of the integrated electrical machine 103 of this embodiment is similar to that of the integrated electrical machine 102 of the second embodiment, both employing a double-rotor single-stator axial-flux universal electrical machine, but the difference between said axial-flux universal electrical machine 20" of said integrated electrical machine 103 and the axial-flux universal electrical machine 20' of the second particular embodiment is that in the present embodiment, in order to make the structure of said integrated electrical machine 103 compact, one of the rotors 21' of said axial-flux universal electrical machine 20 " shares the back iron with the high speed rotor 12 of said axial-flux permanent magnet gear 10, namely, the back iron 211' of the rotor 21' of said axial-flux universal electrical machine 20'' and the back iron 121 of the high speed rotor 12 of said axial-flux permanent magnet gear 10 are the same structure.

### Embodiment four

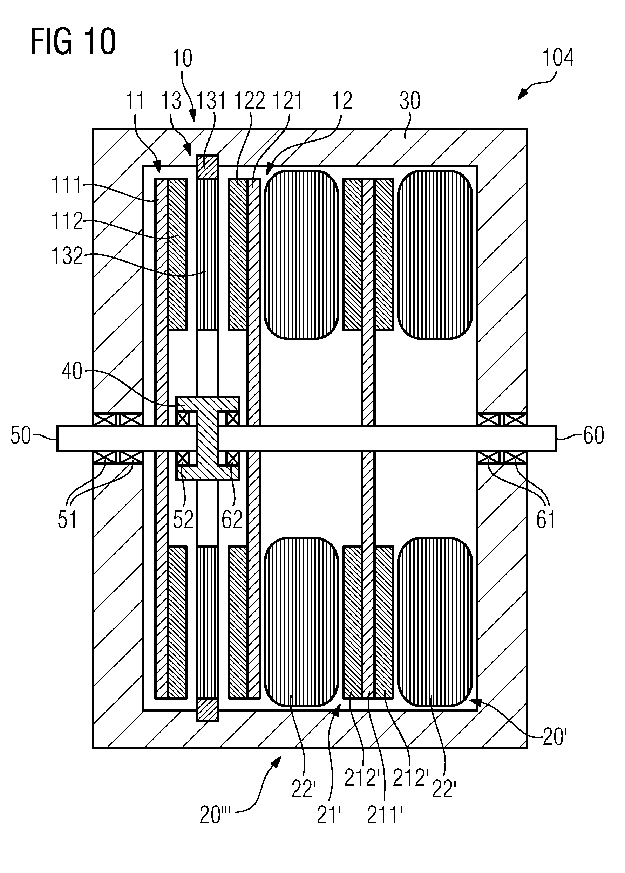

Fig. 10 shows the fourth particular embodiment of the integrated electrical machine of the present invention, and in this particular embodiment, said integrated electrical machine 100 is implemented as an electrical machine 104 integrating an axial-flux permanent magnet gear with an axial-flux universal electrical machine.

Referring to Fig. 10, the structure of the integrated electrical machine 104 of this particular embodiment is similar to that of the integrated electrical machine 102 of the second embodiment, and it differs in that, the original double-rotor single-stator axial-flux universal electrical machine 20' is replaced by a single-stator double-rotor axial-flux universal electrical machine 20''' in said integrated electrical machine 104. Said axial-flux universal electrical machine 20''' comprises a pair of stators 22' which are disposed axially and in parallel, and a rotor 21' positioned between the pair of stators 22'. The structure of said pair of stators 22' is the same as that of the stators 22' of the second embodiment. Said rotor 21' comprises a back iron 211' and magnets 212' which are fixed on both sides of said back iron 211', respectively, and opposite to the pair of stators 22', respectively.

### Embodiment five

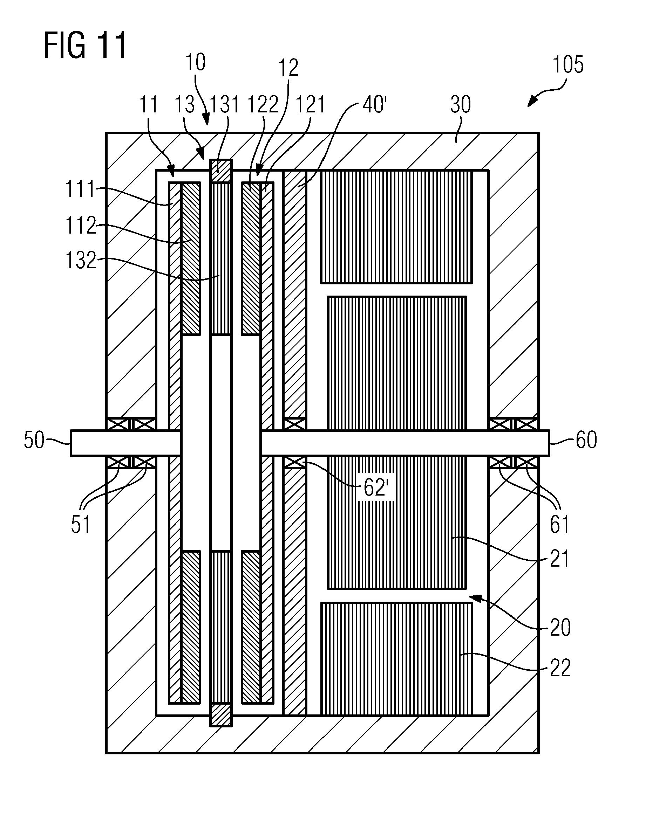

Fig. 11 shows the fifth embodiment of the integrated electrical machine of the present invention, and in this particular embodiment, said integrated electrical machine 100 is implemented as an electrical machine 105 integrating an axial-flux permanent magnet gear with a radial-flux universal electrical machine.

Referring to Fig. 11, the structure of the integrated electrical machine 105 of this particular embodiment is similar to that of the integrated electrical machine 101 of the first embodiment, and it differs in that, in this embodiment, in order to further simplify the structure, the bearing plate 40 disposed on the stator 13 of said axial-flux permanent magnet gear 10 in the first embodiment and the bearings 52, 62 disposed on both sides of said bearing plate 40 are omitted.

A low speed rotational shaft 50 is supported on a housing 30 by a bearing 51, with one end extending outwards to connect to an external load or a power source, and the other end extending to the interior of the housing 30 and passing through a back iron 111 of a low speed rotor 11 of said axial-flux permanent magnet gear 10, so as to fix the low speed rotor 11 of said axial-flux permanent magnet gear 10 thereon; a fixing plate 40' fixed on said housing 30 is disposed between said axial-flux permanent magnet gear 10 and said axial-flux universal electrical machine 20, and the high speed rotational shaft 60 is supported on said housing 30 and said fixing plate 40', respectively, by a bearing 61 and a bearing 62' and extends towards the direction of said axial-flux permanent magnet gear 10 and passes through a back iron 121 of a high speed rotor 12 of said axial-flux permanent magnet gear 10, so as to fix thereon the high speed rotor 12 of said axial-flux permanent magnet gear 10.

By way of the design of this embodiment, it simplifies effectively the structure of said axial-flux permanent magnet gear 10 in the first embodiment, reduces the number of bearings needed, and therefore, makes the whole structure of the integrated electrical machine 105 more compact.

Likewise, the design of this embodiment is applicable to the abovementioned second and fourth embodiments in the same way.

### Embodiment six

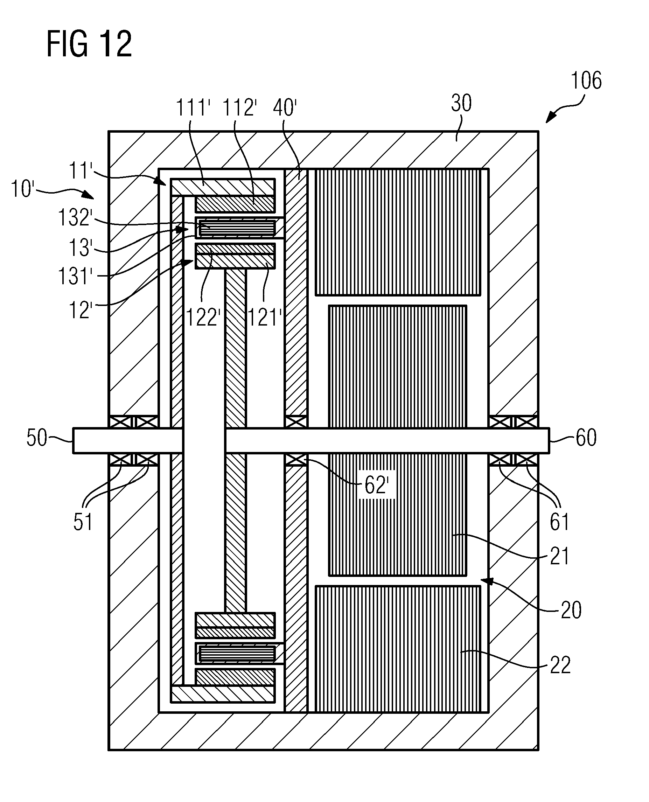

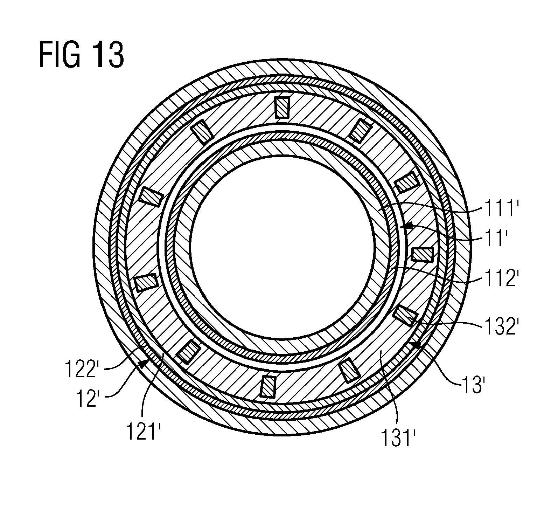

Figs. 12 and 13 show the sixth embodiment of the integrated electrical machine of the present invention, and in this embodiment, said integrated electrical machine 100 is implemented as an electrical machine 106 integrating a radial-flux permanent magnet gear with a radial-flux universal electrical machine.

The structure of the integrated electrical machine 106 of this particular embodiment is similar to that of the integrated electrical machine 105 of the fifth embodiment, and it differs in that the axial-flux permanent magnet gear 10 in the integrated electrical machine 105 of the fifth embodiment is replaced by a radial flux permanent magnet gear 10' in said integrated electrical machine 106 of this particular embodiment. Said radial flux permanent magnet gear 10' comprises a low speed rotor 11' and a high speed rotor 12' which are coaxial, and a stator 13' disposed between said low speed rotor 11' and said high rotor 12'. Said low speed rotor 11' and said high rotor 12' comprise respectively a back iron 111', 121', and magnets 112', 122' radially distributed evenly along the circumference of said back iron 111', 121' and towards said stator 13'. Said stator 13' comprises a back-plate 131', and magnetic sheets 132' evenly embedded in said back-plate 131'.

The low speed rotational shaft 50 is supported on the housing 30 by a bearing 51, with one end extending outwards to connect to an external load or power source, and the other end extending to the interior of the housing 30 and passing through the back iron 111' of the low speed rotor 11' of said axial-flux permanent magnet gear 10', so as to fix thereon the low speed rotor 11' of said radial flux permanent magnet gear 10'; a fixing plate 40' fixed in said housing 30 is disposed between said radial flux permanent magnet gear 10' and said radial-flux universal electrical machine 20, and the high speed rotational shaft 60 is supported on said housing 30 and said fixing plate 40', respectively, by a bearing 61 and a bearing 62', extends towards said radial flux permanent magnet gear 10' and passes through the back iron 121' of the high speed rotor 12' of said axial-flux permanent magnet gear 10', so as to fix thereon the high speed rotor 12' of said radial flux permanent magnet gear 10'.

Likewise, the radial-flux universal electrical machine 20 of this embodiment can be replaced with the axial-flux universal electrical machine in the second and fourth embodiments.

The above particular embodiments are all described as examples that said axial or radial-flux universal electrical machine is disposed on the side close to the high speed rotor of the axial or radial flux permanent magnet gear, and the rotor of said axial or radial-flux universal electrical machine is fixed on the high speed rotational shaft of said axial or radial flux permanent magnet gear, and this case is adapted to high speed electrical machine systems. However, those skilled in the art should understand that, according the design concept of the present invention, it is also possible for said axial or radial-flux universal electrical machine to be disposed on the side close to the low speed rotor of the axial or radial flux permanent magnet gear, and the rotor of said axial or radial-flux universal electrical machine being fixed on the low speed rotational shaft of said axial or radial flux permanent magnet gear, so as to be adapted to low speed electric systems.

What are described above are merely preferred embodiments of the present invention, and are not intended to limit the present invention, and any modification, equivalent replacement and improvement within the spirit and principle of the present invention should be covered in the protective scope of the present invention.

## Claims

1. An integrated electrical machine, comprising a permanent magnet gear (10, 10') and a universal electrical machine (20, 20', 20'', 20''') having a rotor (21, 21') and a stator (22, 22'), **characterized in that**:
said permanent magnet gear (10, 10') and said universal electrical machine (20, 20', 20", 20''') are disposed in a housing (30); said permanent magnet gear (10, 10') is connected to an external load or a driving source via a low speed rotational shaft (50) on one side, and connected to the rotor (21, 21') of the universal electrical machine (20, 20', 20", 20''') via a high speed rotational shaft (60) on the other side, alternatively, said permanent magnet gear (10, 10') is connected to the rotor (21, 21') of the universal electrical machine (20, 20', 20", 20''') via the low speed rotational shaft (50), and connected to an external load or a driving source via the high speed rotational shaft (60) on the other side.

2. The integrated electrical machine as claimed in claim 1, **characterized in that** said permanent magnet gear is an axial-flux permanent magnet gear (10), which comprises a low speed rotor (11) and a high speed rotor (12) which are disposed axially and in parallel, and a stator (13) fixed between said low speed rotor (11) and said high speed rotor (12), with said low speed rotor (11) and said high speed rotor (12) being fixed respectively onto said low speed rotational shaft (50) and said high speed rotational shaft (60); and the rotor (21, 21') of said universal electrical machine (20, 20', 20", 20''') is fixed onto said high speed rotational shaft (60).

3. The integrated electrical machine as claimed in claim 2, **characterized in that** the low speed rotor (11) and the high speed rotor (12) of said axial-flux permanent magnet gear (10) comprise respectively a back iron (111, 121) and magnets (112, 122) radially distributed evenly along the perimeter of said back iron (111, 121); and the magnets (112, 122) of said low speed rotor (11) and said high speed rotor (12) are disposed oppositely and coaxially.

4. The integrated electrical machine as claimed in claim 3, **characterized in that** the stator (13) of said axial-flux permanent magnet gear (10) is fixed onto said housing (30) and comprises a back-plate (131) and magnetic sheets (132) radially distributed evenly along the perimeter of said back-plate (131).

5. The integrated electrical machine as claimed in claim 4, **characterized in that** the south and north poles (S, N) of the magnets (112, 122) of said low speed rotor (11) and high speed rotor (12) are disposed alternately, and the number of the south and north pole pairs (S, N) of the magnets (112) of said low speed rotor (11) is different from the number of the south and north pole pairs (S, N) of the magnets (122) of said high speed rotor (12), and the number of the magnetic sheets (132) of said stator (13) is the sum of the numbers of the pole pairs of the magnets (112, 122) of said low speed rotor (11) and said high speed rotor (12).

6. The integrated electrical machine as claimed in claim 5, **characterized in that** a soft magnetic material is inserted between the south and north pole pair (S, N) of the magnets (122) of said high speed rotor (12) to adjust the pole-arc factor.

7. The integrated electrical machine as claimed in claim 5, **characterized in that** a bearing plate (40) is disposed fixedly on the stator (13) of said axial-flux permanent magnet gear (10); one end of said low speed rotational shaft (50) is supported on one side of said bearing plate (40) by a bearing (52), and the other end of said low speed bearing (50) passes through the back iron (111) of the low speed rotor (11) of said axial-flux permanent magnet gear (10), and is supported on said housing (30) by a bearing (51); and one end of said high speed rotational shaft (60) is supported on the other side of said bearing plate (40) by a bearing (62), and the other end of said high speed rotational shaft (60) passes through the back iron (121) of the high speed rotor (12) of said axial-flux permanent magnet gear (10), and is supported on said housing (30) by a bearing (61).

8. The integrated electrical machine as claimed in claim 5, **characterized in that** said low speed rotational shaft (50) is supported on the housing (30) by the bearing (51), and one end thereof extends towards the exterior of the housing (30) so as to be connected to the external load or the power source, while the other end thereof extends towards the interior of the housing (30) and passes through the back iron (111) of the low speed rotor (11) of said axial-flux permanent magnet gear (10); and a fixed plate (40') fixed within said housing (30) is disposed between said axial-flux permanent magnet gear (10) and said universal electrical machine (20), and said high speed rotational shaft (60) is supported on said housing (30) and said fixed plate (40') respectively by the bearing (61) and a bearing (62'), and extends towards the direction of said axial-flux permanent magnet gear (10) and passes through the back iron (121) of the high speed rotor (12) of said axial-flux permanent magnet gear (10).

9. The integrated electrical machine as claimed in claim 1, **characterized in that** said permanent magnet gear is a radial permanent magnet gear (10'), said radial permanent magnet gear (10') comprises a low speed rotor (11') and a high speed rotor (12') which are disposed radially and coaxially, and a stator (13') disposed between said low speed rotor (11') and high speed rotor (12'), and said low speed rotor (11') and said high speed rotor (12') are fixed respectively onto said low speed rotational shaft (50) and said high speed rotational shaft (60); and the rotor (21, 21') of said universal electrical machine (20, 20', 20''') is fixed onto said high speed rotational shaft (60).

10. The integrated electrical machine as claimed in claim 9, **characterized in that** said low speed rotor (11') and said high speed rotor (12') respectively comprise a back iron (111', 121') and magnets (112', 122') distributed evenly along the perimeter of the back iron (111', 121') with south and north poles (S, N) thereof alternately and evenly disposed towards said stator (13').

11. The integrated electrical machine as claimed in claim 10, **characterized in that** said stator (13') of the radial flux permanent magnet gear (10') comprises a back-plate (131') and magnetic sheets (132') embedded evenly in said back-plate (131').

12. The integrated electrical machine as claimed in claim 10, **characterized in that** the low speed rotational shaft (50) is supported on the housing (30) by a bearing (51) with one end thereof extending towards the exterior of the housing (30) so as to be connected to the external load or the driving source, and with the other end thereof extending towards the interior of the housing (30) and passing through the back iron (111') of the low speed rotor (11') of said radial flux permanent magnet gear (10'); a fixed plate (40') fixed in said housing (30) is disposed between said radial flux permanent magnet gear (10') and said universal electrical machine (20), and the high speed rotational shaft (60) is supported on said housing (30) and said fixed plate (40') respectively by a bearing (61) and a bearing (62'), extends towards the direction of said radial flux permanent magnet gear (10') and passes through the back iron (121') of the high speed rotor (12') of said radial flux permanent magnet gear (10').

13. The integrated electrical machine as claimed in any one of claims 1 to 12, **characterized in that** said universal electrical machine (20) is a radial-flux universal electrical machine, and the rotor (21) and the stator (22) thereof are disposed radially and coaxially.

14. The integrated electrical machine as claimed in any one of claims 1 to 12, **characterized in that** said universal electrical machine (20' , 20'', 20''') is an axial-flux universal electrical machine, and the rotor (21') and the stator (22') thereof are disposed axially and in parallel.

15. The integrated electrical machine as claimed in claim 14, **characterized in that** said axial-flux universal electrical machine (20', 20") comprises a pair of rotors (21') disposed axially and in parallel and a stator (22') fixed between the pair of rotors (21').

16. The integrated electrical machine as claimed in claim 15, **characterized in that** one of the rotors (21') of said axial-flux universal electrical machine (20'') shares the back iron (121, 211') with the high speed rotor (12) of said axial flux permanent magnet gear (10).

17. The integrated electrical machine as claimed in claim 14, **characterized in that** said axial-flux universal electrical machine (20') comprises a pair of stators (22') disposed axially and in parallel and a rotor (21') positioned between the pair of stators (22').
